# EUROPÄISCHE PATENTSCHRIFT

(11) **EP 3 484 715 B1**
(45) Veröffentlichungstag und Bekanntmachung des Hinweises auf die Patenterteilung: **31.08.2022**
(21) Anmeldenummer: 17742673.1
(22) Anmeldetag: 10.07.2017
(51) Int. Cl.: B42D 25/20, B32B 38/00

(54) **VERFAHREN ZUM HERSTELLEN EINES WERT- ODER SICHERHEITSPRODUKTES**
METHOD FOR PRODUCING A VALUE OR SECURITY PRODUCT
PROCÉDÉ DE FABRICATION D'UN PRODUIT DE VALEUR OU DE SÉCURITÉ

(30) Priorität: 13.07.2016 DE 102016212741
(43) Veröffentlichungstag der Anmeldung: 22.05.2019
(73) Patentinhaber: Bundesdruckerei GmbH, 10969 Berlin (DE)
(72) Erfinder: MUTH, Oliver, 12277 Berlin (DE); MÜLLER, Carsten, 81735 München (DE); NEIFFER, Stefan, 80803 München (DE)
(74) Vertreter: Patentanwälte Bressel und Partner mbB
(86) Internationale Anmeldenummer: PCT/EP2017/067197
(87) Internationale Veröffentlichungsnummer: WO 2018/011108

(56) Entgegenhaltungen:
- EP-A2- 2 441 583
- WO-A1-02/075649
- WO-A1-2009/056351
- WO-A1-2016/014027
- WO-A2-03/074291
- DE-A1-102008 012 419
- DE-B3-102014 104 045

## Beschreibung

### Gebiet der Erfindung

Die vorliegende Erfindung betrifft ein Verfahren zum Herstellen eines Wert- oder Sicherheitsproduktes, insbesondere einer Wert- oder Sicherheitskarte, beispielsweise einer Scheck- oder Personalausweiskarte.

### Stand der Technik und Hintergrund der Erfindung

Wert- oder Sicherheitsdokumente dienen beispielsweise zur Identifikation von Personen und/oder Gegenständen und/oder zum bargeldlosen Zahlungsverkehr. Sie weisen unter anderem visuell erkennbare Merkmale auf, die sie eindeutig einer Person und/oder einem Gegenstand und/oder einem Geld- oder Wertpapierkonto zuordnen und die nur dem Dokumenteninhaber erlauben, sich auszuweisen bzw. über den Gegenstand bzw. das Konto zu verfügen und beispielsweise Geldtransfers zu veranlassen. Aus diesem Grunde müssen diese Dokumente gegen Missbrauch geschützt werden. Hierzu können die Dokumente beispielsweise eine individualisierende Bedruckung aufweisen, mit der das Wert- oder Sicherheitsdokument zu einer Person oder einer Sache zugeordnet wird.

Üblicherweise werden Identifikationsdokumente (ID-Dokumente) aus Kunststoffmaterialien hergestellt, um deren notwendige Flexibilität zu gewährleisten. Häufig werden Wert- oder Sicherheitsdokumente und andere Wert- oder Sicherheitsprodukte durch eine Lamination einer Mehrzahl teilweise graphisch gestalteter Polymerfolien, beispielsweise von Polycarbonatfolien, in einer Heiß/Kalt-Laminierpresse im Bogen-Mehrfachformat oder auch in einem Durchlauf-Laminierverfahren mit mehreren hintereinander angeordneten Heiz- und Kühl-Press-Stationen hergestellt. In den Dokumenten enthaltene elektronische Bauelemente sind üblicherweise auf einer Schaltungsträgerlage montiert, die zusammen mit weiteren Dokumentenlagen zu dem Laminat verbunden werden.

In der WO03/074291 A2 werden eine Sicherheitsdokumenten-Karte und ein Verfahren zu deren Herstellung vorgeschlagen, wobei die Karte aus einem Träger und einer mindestens auf einer Seite des Trägers angeordneten Beschichtung besteht. Das Material des Trägers enthält High-Density-Polyethylen(HDPE) und Linear-Low-Density-Polyethylen (LLD-PE). Das Material der Beschichtung enthält Polycarbonat. Der Träger und die Beschichtung werden mittels Heisskleber zusammengefügt.

Die WO02/075649 A1 beschreibt eine Karte mit einer Vielzahl von Kunststoffschichten und einem Kunststoffbereich zum Tragen eines individualisierten Hologrammes. Hierbei ist vorgesehen, dass in den Kunststoffschichten eine Ausnehmung und in dieser der Kunststoffbereich zum Tragen des individualisierten Hologrammes als Einsatz vorgesehen ist.

Die WO 2009/056351 beschreibt ein Verfahren zum Herstellen eines Polymerschichtverbunds sowie einen Polymerschichtverbund, der insbesondere als Sicherheits- und/oder Wertdokument ausgestaltet ist. Das Verfahren umfasst folgende Schritte: Bereitstellen von mehreren Polymerschichten als die Substratschichten, Drucken der ersten personalisierenden und/oder individualisierenden Informationen auf mindestens eine Substratschicht, Zusammentragen der Substratschichten zu einem Substratschichtenstapel und Laminieren der Substratschichten zu dem Polymehrschichtverbund, wobei die ersten personalisierende und/oder individualisierende Information in mindestens zwei Druckauszüge zerlegt wird, die mindestens zwei Druckauszüge auf mindestens zwei unterschiedliche Substratschichtoberflächen abgestimmt gedruckt werden, so dass die gedruckten Druckauszüge in dem Polymerschichtverbund passergenau übereinander liegen und gemeinsam die erste personalisierende und/oder individualisierende Information wiedergeben.

Die DE 10 2008 012 419 A1 beschreibt einen Polymerschichtverbund, der mindestens zwei stoffschlüssig miteinander verbundene Polymerschichten aufweist, wobei sich in und/oder auf dem Verbund mindestens eine mit einer im sichtbaren Bereich absorbierenden Druckschicht bedruckte Oberfläche auf einer Polymerschicht des Verbundes befindet, die absorbierende Druckschicht mindestens einen Druckbereich bildet und alle Druckbereiche auf der bedruckten Oberfläche der Polymerschicht zusammen einen Flächenanteil von mindestens 50 % und höchstens 95 % haben.

Die DE 102014104045 B3 beschreibt ein Verfahren zur Herstellung einer Datenseite sowie eine Datenseite zur Einbindung in ein vorzugsweise buchförmiges Sicherheits- oder Wertdokument, bestehend aus zumindest zwei übereinander angeordneten Lagen aus einem organischen Polymerwerkstoff und zumindest einer Faserschicht, welches in einem Teilbereich zwischen den Lagen sowie außerhalb der Lagen einen Überstand bildend angeordnet ist, wobei die erste Lage als Rollenware bereit gestellt und von einer Rolle abgezogen wird, auf eine obere Seite der ersten Lage ein organischer Binder zumindest teilweise aufgetragen wird, eine Faserschicht als Rollenware bereit gestellt und von einer Rolle abgezogen wird und die Faserschicht auf die erste Lage einen Überstand bildend entlang einer Seitenkante der ersten Lage aufgebracht wird und die zweite Lage als Rollenware bereit gestellt und von einer Rolle abgezogen wird und die zweite Lage auf die Faserschicht aufgebracht wird, wobei die zweite Lage zumindest in Teilbereichen die erste Lage überdeckt.

Die DE 10 2008 012 419 zeigt einen Polymerschichtverbund für ein Sicherheitsdokument, bei dem eine absorbierende Druckschicht einen Flächenanteil von mindestens 50% und hochstens 95% bedeckt.

Die 10 2014 104 045 B3 beschreibt ein Verfahren zum Herstellen einer Datenseite zur Einbindung in ein Buchförmiges Sicherheitsdokument.

Die WO 2017/014027 A1 beschriebt ein Kartensubstrat, auf welches ein Transferelement aufgebracht wird, mit verringerter Wölbung.

Die EP 2 441 583 A2 beschreibt ein Druckträgerverbundmaterial, das aus einer Druckträgerschicht und einer Druckschutzschicht gebildet wird.

In DE 10 2007 052 947 A1 ist ein Verfahren zur Herstellung eines Verbundes aus einer ersten und einer zweiten Polymerschicht, die jeweils aus einem Polycarbonat-Polymer auf Basis von Bisphenol A hergestellt sind, angegeben. Auf der ersten Polymerschicht ist eine Tintenstrahldruckschicht angeordnet. Die Tintenstrahldruckschicht ist aus einer Tintenstrahldruckfarbe gebildet, die mit einem Bindemittel mit einem Polycarbonatderivat auf Basis eines geminal disubstituierten Dihydroxydiphenylcycloalkans gebildet ist. Zur Herstellung des Verbundes wird die zweite Polymerschicht auf die erste Polymerschicht aufgelegt, wobei die Tintenstrahldruckschicht abgedeckt wird, und die beiden Polymerschichten unter Druck bei einer Temperatur von 120 °C bis 230 °C für eine definierte Zeitspanne miteinander laminiert werden.

### Der Erfindung zugrunde liegende Aufgaben:

Bei der Herstellung von Wert- oder Sicherheitsprodukten werden üblicherweise mehrere Polymerschichten miteinander laminiert, wobei beispielsweise auch eine elektrische Schaltung in den Polymerschichtverbund integriert werden kann. Damit wird typischerweise ein Grundkörper (Rohproduktkörper), beispielsweise ein Rohkartenkörper, hergestellt, der anschließend mit individualisierenden Informationen bedruckt wird, um das Wert- oder Sicherheitsprodukt herzustellen. Es hat sich jedoch herausgestellt, dass die Herstellung der Wert- oder Sicherheitsprodukte häufig misslingt, weil die Bedruckung nicht immer fehlerfrei stattfindet. Da mit einer fehlerhaften Bedruckung der gesamte relativ teure Grundkörper verworfen werden muss, stellt diese Vorgehensweise einen Nachteil dar. Die alternative Vorgehensweise der Herstellung von individualisierenden Drucken auf einzelnen Polymerfolien und eine nachfolgende Lamination der Folien miteinander ist jedoch nicht wünschenswert, weil angestrebt wird, zunächst nicht individualisierte Rohproduktkörper, beispielsweise Rohkarten, in einer zentralen Produktionsstätte herzustellen und die Rohkarten dann in einer anderen (dezentralen) Fertigungsstätte zu individualisieren.

Von daher liegt der vorliegenden Erfindung die Aufgabe zugrunde, ein Verfahren zu finden, das einerseits eine zentrale Herstellung von nicht individualisierten Rohproduktkörpern, beispielsweise Rohkartenkörpern, und eine nachfolgende Individualisierung in dezentralen Fertigungsstätten erlaubt und mit dem andererseits das Problem von kostspieligem Ausschuss aufgrund von fehlerhaften Drucken auf den Rohproduktkörpern vermieden wird.

Des Weiteren liegt der vorliegenden Erfindung auch die Aufgabe zugrunde, ein Verfahren zur Herstellung von gegen Fälschung und Verfälschung möglichst sicheren Wert- oder Sicherheitsprodukten bereitzustellen. Außerdem soll eine forensische Nachweismöglichkeit einer Fälschung oder Verfälschung des Wert- oder Sicherheitsproduktes gegeben sein.

### Definitionen der Begriffe gemäß der vorliegenden Erfindung:

Zum Zwecke der Erläuterung und Definition der vorliegenden Erfindung werden die folgenden Definitionen gegeben:
Soweit in der Beschreibung und in den Ansprüchen der vorliegenden Anmeldung der Begriff ,Wert- oder Sicherheitsprodukt verwendet wird, ist darunter insbesondere ein Wert- oder Sicherheitsdokument oder ein Mehrfachnutzen eines Wert- oder Sicherheitsdokuments, aus dem das Wert- oder Sicherheitsdokument durch Vereinzeln erhältlich ist, zu verstehen. Ein Wert- oder Sicherheitsdokument kann beispielsweise ein Reisepass, Personalausweis, Führerschein, ein Zugangskontrollausweis oder eine andere ID-Karte, eine Passdatenseite, ein Fahrzeugschein, Fahrzeugbrief, Visum, Scheck, Zahlungsmittel, insbesondere eine Banknote, eine Scheck-, Bank-, Kredit- oder Barzahlungskarte, Kundenkarte, Gesundheitskarte, Chipkarte, ein Firmenausweis, Berechtigungsnachweis, Mitgliedsausweis, Geschenk- oder Einkaufsgutschein, Frachtbrief oder ein sonstiger Berechtigungsnachweis, Steuerzeichen, Postwertzeichen, Ticket, Jeton oder ein anderes Dokument sein. Das Wert- oder Sicherheitsprodukt kann beispielsweise eine Smartcard sein. Das Wert- oder Sicherheitsdokument kann im ID 1-, ID 2-, ID 3- oder in irgendeinem anderen normierten oder nicht normierten Format, beispielsweise in Heftform, wie bei einem passähnlichen Gegenstand, vorliegen. Vorzugsweise liegt das Wert- oder Sicherheitsdokument in Kartenform vor. Ein Wert- oder Sicherheitsprodukt ist im Allgemeinen ein Laminat aus mehreren Dokumentenlagen, die passergenau unter Wärmeeinwirkung und unter erhöhtem Druck flächig miteinander verbunden sind. Diese Produkte sollen den normierten Anforderungen genügen, beispielsweise gemäß ISO 10373, ISO/IEC 7810, ISO 14443 in der am Prioritätstag der vorliegenden Anmeldung geltenden Fassung.

Die Dokumentenlagen bestehen beispielsweise aus einem Trägermaterial, das sich für eine Lamination eignet. Sofern in der vorliegenden Anmeldung nichts Abweichendes angegeben ist, kann dieses Trägermaterial durch ein oder mehrere Polymere gebildet sein, die ausgewählt sind aus einer Gruppe, umfassend Polycarbonat (PC), insbesondere Bisphenol A-Polycarbonat, Polyethylenterephthalat (PET), deren Derivate, wie Glykol-modifiziertes PET (PETG), Polyethylennaphthalat (PEN), Polyvinylchlorid (PVC), Polyvinylbutyral (PVB), Polymethylmethacrylat (PMMA), Polyimid (PI), Polyvinylalkohol (PVA), Polystyrol (PS), Polyvinylphenol (PVP), Polypropylen (PP), Polyethylen (PE), thermoplastische Elastomere (TPE), insbesondere thermoplastisches Polyurethan (TPU), Acrylnitril-Butadien-Styrol-Copolymer (ABS) sowie deren Derivate, oder Papier oder Pappe oder Glas oder Metall oder Keramik. Bevorzugt besteht das Wert- oder Sicherheitsprodukt aus Polycarbonat und zwar besonders bevorzugt aus Polycarbonat auf Basis von Bisphenol A oder aus PC/TPU/PC. Die Polymere können entweder gefüllt oder ungefüllt vorliegen. Im letzteren Falle sind sie vorzugsweise transparent oder transluzent. Falls die Polymere gefüllt sind, sind sie opak. Bevorzugt wird das Produkt aus 3 bis 12 Folien, vorzugsweise 4 bis 10 Folien, hergestellt.

Soweit in der Beschreibung und in den Ansprüchen der vorliegenden Anmeldung die Begriffe 'individualisierend', 'individualisiert', 'personalisierend' und 'personalisiert' verwendet werden, so ist darunter zu verstehen, dass sich das Wert- oder Sicherheitsdokument, auf das sich der Begriff bezieht, von anderen Wert- oder Sicherheitsdokumenten unterscheidet und das Wert- oder Sicherheitsdokument einem Objekt (im Falle der Begriffe 'individualisierend' oder 'individualisiert'), insbesondere einer Person (im Falle der Begriffe ,personalisierend oder 'personalisiert'), zugeordnet ist. Das Wert- oder Sicherheitsdokument kann anstelle einer Person auch einem Gegenstand, wie einem Kraftfahrzeug, oder einem Wertpapier, zugeordnet werden. Durch die Individualisierung bzw. Personalisierung erkennt ein Dritter die eindeutige Zuordnung des Wert- oder Sicherheitsdokuments zu dem Objekt oder zu Gruppen von gleichartigen oder ähnlichen Objekten.

Soweit in der Beschreibung und in den Ansprüchen der vorliegenden Anmeldung die Begriffe 'Laminieren' und ,Lamination' verwendet werden, so ist darunter das flächige Verbinden von mindestens zwei Lagen unter Einwirkung von Druck und Wärmeeinbringung während einer vorgegebenen Zeitspanne zu verstehen, wobei kein Klebermaterial zwischen den beiden zu verbindenden Lagen verwendet wird. Durch das Erweichen bzw. Flüssigwerden der Lagenmaterialien wird ein monolithischer Verbund der beiden Verbindungspartner erreicht, d.h. eine Grenzlinie zwischen den beiden Materialien ist in einem angefertigten Querschnitt nicht mehr erkennbar. Als andere Begriffe für ,Laminieren' bzw. ,Lamination' können die Begriffe ,Kaschieren' und 'Kaschierung' verwendet werden. Üblicherweise wird ein Heiß-/Kalt-Laminierverfahren angewendet, bei dem die zu verbindenden Lagen zunächst unter Druck und Zuführung von Wärme flächig miteinander verbunden und dann unter Aufrechterhaltung des Druckes wieder abgekühlt werden, sodass ein Laminat entsteht.

Soweit in der Beschreibung und in den Ansprüchen der vorliegenden Anmeldung der Begriff 'Druckbild' verwendet wird, ist darunter eine mittels eines Druckverfahrens gebildete zweidimensionale Struktur zu verstehen, die in Form eines beliebigen zweidimensionalen Musters ausgebildet ist und zwar in Form beliebiger alphanumerischer Zeichen jeglicher Schriften- und Zahlenformate und anderer typografischer Zeichen, oder in Form von Linien, Flächen, gegenständlichen und nichtgegenständlichen Darstellungen, beispielsweise von Logos, (Landes-)-Wappen, Abbildungen von Gegenständen, Lebewesen, wie landestypischen Pflanzen, oder dergleichen. Ein oder mehrere Druckbilder können das Wert- oder Sicherheitsdokument individualisieren, insbesondere personalisieren. Alternativ dazu können Druckbilder auch in Form von nicht-individualisierenden Bildern/Mustern ausgebildet sein. Dabei kann es sich um Sicherheitsmuster, wie Guillochen, oder um Kennzeichen der ausgebenden Stelle, beispielsweise ein Kennzeichen eines Unternehmens, wie eines Logos oder Wappens, handeln. In diesem Falle handelt es sich um konfigurierbare Druckbilder.

### Grundzüge der Erfindung und bevorzugte Ausführungsformen:

Gemäß der vorliegenden Erfindung werden die vorstehend angegebenen Aufgaben durch ein Verfahren zum Herstellen eines Wert- oder Sicherheitsprodukts, insbesondere zur Herstellung eines Wert- oder Sicherheitsdokuments, vorzugsweise einer Wert- oder Sicherheitskarte, besonders bevorzugt einer ID-Karte, bzw. eines Einfach- oder Mehrfachnutzens von Wert- oder Sicherheitsdokumenten gelöst.

Das erfindungsgemäße Verfahren umfasst die folgenden Verfahrensschritte:
(a) Bereitstellen eines Rohproduktkörpers und von zwei Polymerfolien;
(b) Bedrucken jeweils mindestens einer der Oberflächen der zwei Polymerfolien mit mindestens einem Druckbild;
(c) Zusammentragen des Rohproduktkörpers und der zwei Polymerfolie zu einem Produktstapel, sodass der Rohproduktkörper (200) an dessen beiden Seiten mit jeweils einer der zwei bedruckten Polymerfolien (300) zu einem Produktstapel (400) zusammengetragen wird, wobei die mit dem mindestens einen Druckbild bedruckte Oberflächen der zwei Polymerfolien in Kontakt mit dem Rohproduktkörper gebracht wird; und
(d) Laminieren des Produktstapels, sodass ein unlösbarer Verbund zwischen dem Rohproduktkörper und den zwei Polymerfolie erzeugt wird.

Gemäß der Erfindung wird ein Rohproduktkörper somit an dessen beiden Seiten mit jeweils einer bedruckten Polymerfolie zu einem Produktstapel zusammengetragen und miteinander verbunden. In diesem Falle werden Druckbilder an beiden (Haupt)Seiten des Wert- oder Sicherheitsdokuments gebildet.

Somit umfasst das erfindungsgemäße Verfahren zwei Verfahrensabschnitte, nämlich einen ersten Verfahrensabschnitt zum Bereitstellen des Rohproduktkörpers zusammen mit der Polymerfolie (gemäß Verfahrensschritt (a)) und einen zweiten Verfahrensabschnitt zum Verbinden des solcherart hergestellten Rohproduktkörpers mit den zwei bedruckten Polymerfolien (gemäß Verfahrensschritt (d)).

Ein Rohproduktkörper gemäß der vorliegenden Erfindung ist ein blatt-, karten- oder plattenförmiger Gegenstand. Es handelt sich, wie weiter unten erläutert ist, um einen Gegenstand, der einen Nutzen für das herzustellende Wert- oder Sicherheitsdokument oder mehrere Nutzen des herzustellenden Wert- oder Sicherheitsdokuments enthalten kann. Der Rohproduktkörper weist zwei Hauptseiten auf, nämlich eine Oberseite (Vorderseite) und eine Unterseite (Rückseite), die durch Oberflächen des Rohproduktkörpers gebildet sind. Der Rohproduktkörper ist aus einem oder mehreren der Materialien hergestellt, aus denen das Wert- oder Sicherheitsdokument gebildet ist.

Der Rohproduktkörper ist das Vorprodukt zur Herstellung des Wert- oder Sicherheitsproduktes. Er enthält typischerweise daher bereits alle nicht-individualisierenden Informationen und gegebenenfalls anderen Sicherheitsmerkmale des fertigen Wert- oder Sicherheitsproduktes, beispielsweise in Form von Sicherheitsdrucken, wie Guillochen und/oder anderen Musterdrucken, etwa in Form von Logos und/oder allgemeine Informationen enthaltenden Drucken über die die Karte ausgebende Stelle, sowie ferner gegebenenfalls eine elektrische Schaltung. Der Rohproduktkörper enthält typischerweise noch keine Informationen und andere Sicherheitsmerkmale, die das Produkt individualisieren, denn diese sollen vorzugsweise erst mit der mit dem Rohproduktkörper zu verbindenden Polymerfolie in das fertige Produkt eingebracht werden.

Gemäß der vorliegenden Erfindung wird oder ist der Rohproduktkörper durch Laminieren von mindestens zwei Polymerschichten, beispielsweise Polymerfolien, hergestellt. Gemäß der vorliegenden Erfindung umfasst das erfindungsgemäße Verfahren somit zwei Verfahrensabschnitte, nämlich einen ersten Laminierschritt zum Herstellen des Rohproduktkörpers aus mindestens zwei Polymerschichten (gemäß Verfahrensschritt (a)) und einen zweiten Laminierschritt zum Verbinden des solcherart hergestellten Rohproduktkörpers mit den zwei bedruckten Polymerfolie (gemäß Verfahrensschritt (d)).

Gemäß zum Laminierverfahren alternativen, nicht beanspruchten Herstellungsverfahren zum Bereitstellen des Rohproduktkörpers kann dieser auch mittels eines Extrusions-, Spritzgießverfahrens oder mittels noch eines anderen Verfahrens hergestellt werden (beispielsweise mittels eines 3D-Druckverfahrens).

Damit der Rohproduktkörper nicht-individualisierende Informationen und gegebenenfalls andere nicht-individualisierbare Sicherheitsmerkmale, beispielsweise Sicherheitsdrucke, wie Guillochen und/oder andere Musterdrucke, etwa Logos und/oder allgemeine Informationen enthaltende Drucke über die die Karte ausgebende Stelle, aufweisen kann, kann eine der Lagen des Rohproduktkörpers mit einer derartigen Information versehen werden, beispielsweise mit einem Druckverfahren, etwa einem digitalen Druckverfahren, wie einem Tintenstrahldruckverfahren, oder einem beliebigen anderen Druckverfahren, beispielsweise einem Flachdruck-, Tiefdruck- oder Durchdruckverfahren, insbesondere einem Offset-, Flexo- oder Siebdruckverfahren. Ferner kann der Rohproduktkörper auch eine elektrische Schaltung enthalten. Hierzu ist eine Schaltungsträgerlage in dem Rohproduktkörper vorzusehen, die die elektrische Schaltung aufweist. Die mit den Informationen versehenen Lagen des Rohproduktkörpers und/oder die Schaltungsträgerlage werden zusammen mit weiterem Polymermaterial laminiert oder nicht anspruchsgemäß in einem Extrusions-, Spritzgieß- oder noch anderen Verfahren zu dem Rohproduktkörper geformt.

Eine Polymerfolie gemäß der vorliegenden Erfindung ist ein blatt-, karten- oder plattenförmiger Gegenstand, der vorzugsweise aus einem oder mehreren der Materialien hergestellt ist, aus denen das Wert- oder Sicherheitsdokument gebildet ist. Eine Polymerfolie weist zwei Hauptseiten auf, nämlich eine Oberseite und eine Unterseite, wobei zumindest eine dieser Seiten durch eine bedruckbare Oberfläche gebildet ist. Die Polymerfolie ist vorzugsweise nicht aus mehreren Polymerschichten, die etwa mittels eines Laminierverfahrens miteinander verbunden sein könnten, hergestellt. Vielmehr ist darunter vorzugsweise eine Kunststofffolie zu verstehen, die mittels üblicher Verfahren hergestellt worden ist, nämlich durch (Co-)Extrudieren, Gießen, Kalandrieren oder Blasformen, und damit aus geschmolzenem oder gelöstem oder dispergiertem Polymermaterial.

Indem gemäß der vorliegenden Erfindung zunächst der (vorzugsweise nicht individualisierte) Rohproduktkörper hergestellt und erst dann die mit mindestens einem (vorzugsweise individualisierenden) Druckbild versehenen zwei Polymerfolien mit dem Rohproduktkörper verbunden werden, kann das Problem vermieden werden, dass Ausschuss von fertiggestellten Wert- oder Sicherheitsprodukten aufgrund eines fehlerhaften Druckes entsteht. Vielmehr kann die Bedruckung der zwei Polymerfolien überprüft werden, bevor der Rohproduktkörper und die zwei bedruckten Polymerfolien zusammengetragen werden. Dadurch wird ermöglicht, dass eine Polymerfolie mit einer fehlerhaften Bedruckung verworfen und eine neue fehlerfrei bedruckte Polymerfolie hergestellt werden kann, ohne dass erstere mit einem Rohproduktkörper verbunden wird. Der dazugehörige Rohproduktkörper kann mit der erneut hergestellten, fehlerfrei bedruckten Polymerfolie zusammengetragen und mit dieser durch Laminieren verbunden werden. Der mit aufwändigen Mitteln hergestellte und daher kostspielige Rohproduktkörper muss wegen einer fehlerhaften Bedruckung daher nicht verworfen werden.

Durch Erzeugung des mindestens einen Druckbildes auf einer innenliegenden Ebene in dem Wert- oder Sicherheitsprodukt ist eine Manipulation des mindestens einen Druckbildes deutlich erschwert, sodass die Fälschungs- und Verfälschungssicherheit des Wert- oder Sicherheitsproduktes bzw. Wert- oder Sicherheitsdokuments weiter erhöht wird. Außerdem wird dadurch ein forensisches Sicherheitsmerkmal geschaffen, mit dem eine Fälschung oder Verfälschung ermittelt werden kann (siehe weiter unten).

Schließlich ist es mit dem erfindungsgemäßen Verfahren möglich, nicht individualisierte Rohproduktkörper von Wert- oder Sicherheitsprodukten in einer zentralen Fertigungsstätte herzustellen und die Wert- oder Sicherheitsprodukte mit diesen Grundkörpern in dezentralen Fertigungsstätten individualisiert herzustellen. Hierzu wird der Rohproduktkörper in der zentralen Fertigungsstätte zunächst nicht individualisiert hergestellt, etwa mit einem nicht individualisierenden Sicherheitsdruck in einer innenliegenden Ebene in dem Rohproduktkörper und gegebenenfalls auch mit einem durch Programmierung individualisierbaren IC-Chip in einer elektrischen Schaltung, und dann mittels eines oder mehrerer individualisierender Druckbilder auf den zwei Polymerfolien individualisiert, indem mindestens eine der zwei Folien in der dezentralen Fertigungsstätte individualisiert bedruckt und mit dem Rohproduktkörper zusammengetragen und durch Lamination verbunden wird. In der dezentralen Fertigungsstätte kann zudem auch der IC-Chip individualisiert werden. Somit kann beispielsweise eine Rohkartenfertigung getrennt von einer Farbpersonalisierung durchgeführt werden.

In einer bevorzugten Weiterbildung der vorliegenden Erfindung enthält das mindestens eine Druckbild daher mindestens eine individualisierende, insbesondere personalisierende, Information. Beispielsweise kann das mindestens eine Druckbild durch das Gesichtsbild (Passbild) des Dokumenteninhabers und/oder durch andere den Dokumenteninhaber personalisierende Daten in Klarschrift und/oder in verschlüsselter Form gebildet sein, etwa in Form eines Facsimiles der Unterschrift des Dokumenteninhabers und/oder in Form seiner persönlichen Daten, wie Name, Geburtsdatum und -ort, Größe, Augenfarbe, Adresse, besondere Kennzeichen und dergleichen. Indem die individualisierenden Informationen des Wert- oder Sicherheitsdokuments durch mindestens ein Druckbild gebildet werden, ist eine farbige Wiedergabe der individualisierenden Informationen möglich. Dies stellt insbesondere für die Wiedergabe des Gesichtsbildes des Dokumenteninhabers wegen dessen Wiedererkennbarkeit einen gewichtigen Vorteil gegenüber Schwarz/Weiß-Darstellungen dar. Denn anders als bei einem durch Laserschwärzung erzeugten Muster im Inneren des Dokuments kann das mindestens eine Druckbild gemäß der vorliegenden Erfindung in beliebiger Farbkombination erzeugt werden. Das mindestens eine Druckbild wird auf die Polymerfolie vorzugsweise gegenüber der für eine Ansicht des Wert- oder Sicherheitsdokuments beabsichtigten Wiedergabe des mindestens einen Druckbildes seitenverkehrt aufgedruckt, da die mindestens eine Polymerfolie mit der bedruckten Seite mit dem Rohproduktkörper zusammengetragen und verbunden wird und das mindestens eine Druckbild in dem derart hergestellten Wert- oder Sicherheitsdokument vorzugsweise durch die Polymerfolie hindurch betrachtet werden soll. Zusätzlich oder alternativ dazu kann das mindestens eine Druckbild auch nicht-individualisierend sein, indem es etwa nicht-individualisierende Informationen enthält, beispielsweise in Form von Sicherheitsdrucken, wie Guillochen und/oder anderen Musterdrucken, etwa in Form von Logos und/oder allgemeine Informationen enthaltenden Drucken über die die Karte ausgebende Stelle. Das mindestens eine Druckbild kann auch in Form einer (durchgehenden) flächigen Bedruckung vorliegen, beispielsweise zur Ausbildung eines Fensters (siehe weiter unten). Es ist möglich, dass mehrere Druckbilder auf der Polymerfolie erzeugt werden, beispielsweise mehrere individualisierende Druckbilder und/oder nicht-individualisierende Druckbilder. Beispielsweise ist es möglich, dass ein oder mehrere individualisierende bzw. personalisierende Druckbilder, insbesondere das Gesichtsbild des Karteninhabers, mit einem oder mehreren nicht-individualisierenden Druckbildern kombiniert werden, beispielsweise mit einem Firmenlogo oder einem Landeswappen.

In einer weiteren bevorzugten Weiterbildung der vorliegenden Erfindung ist das mindestens eine Druckbild mit einer Druckfarbe gedruckt, die ein Bindemittel auf der Basis eines Polycarbonatderivats enthält. Derartige Druckfarben, die ein Bindemittel mit einem Polycarbonatderivat auf der Basis eines geminal disubstituierten Dihydroxydiphenylcycloalkans enthalten, sind aus DE 10 2007 052 947 A1 bekannt. Von daher wird auf die Offenbarung dieses Dokuments zum Stand der Technik zumindest hinsichtlich der Zusammensetzung der dort beschriebenen Zubereitung, ganz besonders hinsichtlich der Zusammensetzung des dort beschriebenen Bindemittels und der Herstellung der Komponenten dieses Bindemittels, ausdrücklich Bezug genommen und in die vorliegende Offenbarung aufgenommen. Durch Verwendung dieser Druckfarbe kann das mindestens eine Druckbild auf der Polymerfolie mit einem großen Flächenanteil gedruckt werden, ohne dass sich das Problem einer Trennschicht durch das mindestens eine Druckbild einstellt, die dazu führen würde, dass das Wert- oder Sicherheitsprodukt zwischen dem Rohproduktkörper und der Polymerfolie getrennt werden könnte. Beispielsweise kann mit dieser Druckfarbe daher auch eine flächige Bedruckung erzeugt werden, wie eine ein Fenster freilassende (durchgehende) flächige Bedruckung (siehe weiter unten erläuterte spezielle Ausführungsform).

In einer weiteren bevorzugten Weiterbildung der vorliegenden Erfindung, insbesondere in Verbindung mit einer Druckfarbe mit einem Bindemittel auf der Basis eines Polycarbonatderivats, ist der Rohproduktkörper zumindest an der (Haupt)Seite, die in Verfahrensschritt (c) mit der Oberfläche der mindestens einen der zwei Polymerfolien in Kontakt gebracht wird, aus Polycarbonat gebildet. Es hat sich herausgestellt, dass insbesondere durch eine Verwendung einer Druckfarbe mit einem Bindemittel auf der Basis eines Polycarbonatderivats und eines Rohproduktkörpers, der zumindest an der Seite, die mit dieser Druckfarbe in Kontakt kommt, eine sehr wirkungsvolle Diffusion der Druckfarbe in das Material des Rohproduktkörpers ermöglicht wird. Dadurch wird bei einer späteren Trennung der mindestens einen der zwei Polymerfolien von dem Rohproduktkörper immer auch das mindestens eine Druckbild auf beiden voneinander getrennten Dokumententeilen sichtbar sein.

In einer weiteren bevorzugten Weiterbildung der vorliegenden Erfindung, ebenfalls insbesondere in Verbindung mit einer Druckfarbe mit einem Bindemittel auf der Basis eines Polycarbonatderivats, ist die mindestens eine der zwei bedruckten Polymerfolien zumindest an der mit dem mindestens einen Druckbild bedruckten Oberfläche aus Polycarbonat gebildet. Auch für die Kombination einer Druckfarbe mit einem Bindemittel auf der Basis eines Polycarbonatderivats und mindestens einer der zwei Polymerfolien, die zumindest an der bedruckten Seite aus Polycarbonat gebildet ist, hat sich herausgestellt, dass eine besonders wirkungsvolle Diffusion der Druckfarbe in das Material der mindestens einen der zwei Polymerfolie ermöglicht wird.

Es hat sich herausgestellt, dass zur Erzeugung des mindestens einen Druckbildes verwendete Druckfarben unter den beim Laminieren angewendeten Bedingungen in die mindestens eine der zwei Polymerfolien und in die Oberflächen des ebenfalls mit der Druckfarbe des mindestens einen Druckbildes in Kontakt stehenden Rohproduktkörpers eindiffundieren können. Dies geschieht dagegen nicht schon bei dem Druckvorgang und ebenfalls nicht dann, wenn die Oberfläche des Rohproduktkörpers in üblicher Art und Weise mit einem Kratzschutzlack überzogen oder wenn auf diese eine Kratzschutzfolie kaschiert wird. Durch das Eindringen der Druckfarbe in die mindestens eine der zwei Polymerfolien und in den Rohproduktkörper wird die Fälschungs- und Verfälschungssicherheit des so hergestellten Wert- oder Sicherheitsdokuments weiter erhöht. Denn eine eventuelle Delamination der Materialien zum Zwecke des Austausches der mindestens einen mit dem mindestens einen Druckbild bedruckten der zwei Polymerfolie würde für eine nicht wahrnehmbare Fälschung oder Verfälschung des Dokuments nicht ausreichen, weil das mindestens eine Druckbild wegen des Eindiffundierens der Druckfarbe in das Material des Rohproduktkörpers auch nach der Delamination auf dem Rohproduktkörper noch erkennbar wäre. Eine Fälschung oder Verfälschung des Dokuments wäre unter diesen Bedingungen ohne Weiteres sichtbar. Darüber hinaus bietet dieser Effekt eine Möglichkeit der forensischen Untersuchung von Fälschungen, weil das Eindiffundieren in einem durch das Dokument angefertigten Querschnitt sichtbar wäre.

In einer weiteren bevorzugten Weiterbildung der vorliegenden Erfindung wird das mindestens eine Druckbild mit einem digitalen Druckverfahren gedruckt, beispielsweise mit einem Tintenstrahldruckverfahren (Inkjet-Druckverfahren). Digitale Druckverfahren eignen sich wegen ihrer großen Flexibilität besonders gut dafür, individualisierende Druckbilder herzustellen. Alternativ zu einem digitalen Druckverfahren kann in dem erfindungsgemäßen Verfahren natürlich auch ein beliebiges anderes Druckverfahren eingesetzt werden, beispielsweise ein Flachdruck-, Tiefdruck- oder Durchdruckverfahren, insbesondere ein Offset-, Flexo- oder Siebdruckverfahren.

Die Druckfarbe kann in herkömmlicher Art und Weise übliche Farbstoffe und/oder Pigmente enthalten, wobei Farbstoffe gegenüber Pigmenten zu bevorzugen sind, weil diese leichter in die Materialien des Rohproduktkörpers und der mindestens einen der zwei Polymerfolien eindiffundieren.

Die Farbstoffe und Pigmente können elektromagnetische Strahlung im sichtbaren (VIS) Spektralbereich absorbieren und auf diese Weise die visuelle Erkennbarkeit des mindestens einen Druckbildes mit dem bloßen menschlichen Auge bewirken. Denkbar sind auch Farbstoffe und/oder Pigmente, die elektromagnetische Strahlung in einem anderen Spektralbereich als dem sichtbaren Spektralbereich, nämlich im Ultraviolett-(UV)-Spektralbereich und/oder im Infrarot-(IR)-Spektralbereich, absorbieren, gegebenenfalls zusätzlich zum sichtbaren Spektralbereich. Ferner sind auch Druckfarben verwendbar, deren Farbstoffe und/oder Pigmente Photolumineszenzmittel sind, die entweder fluoreszieren oder phosphoreszieren, wenn sie mit elektromagnetischer Strahlung angeregt werden, beispielsweise mit UV-, VIS- und/oder IR-Strahlung. Die Lumineszenz kann im VIS-, IR- und/oder UV-Spektralbereich liegen. Die Farbstoffe und Pigmente können zusätzlich zu einer Absorption im VIS-Spektralbereich auch lumineszieren, insbesondere im VIS-Spektralbereich. Denkbar ist zusätzlich zu einer Absorption im VIS-Spektralbereich auch eine Lumineszenz im IR- und/oder UV-Spektralbereich. Dazu alternativ können die Farbstoffe und Pigmente ausschließlich lumineszieren, nicht aber auch im VIS-Spektralbereich absorbieren. Beispielsweise kann die Druckfarbe Farbstoffe und/oder Pigmente enthalten, die im UV-Spektralbereich anregbar sind und im VIS-Spektralbereich lumineszieren.

Darüber hinaus sind auch Druckfarben möglich, die optisch variable Pigmente enthalten. Derartige Pigmente zeigen typischerweise Interferenzfarben, indem sie in dünnen Schichten vorliegen. Solche Pigmente sind beispielsweise von Merck AG, DE unter dem Handelsnamen Iriodin^{®} erhältlich. Denkbar sind auch Druckfarben, die cholesterische Flüssigkristallpigmente enthalten.

Beispielsweise können die Druckfarben auch maschinenlesbar sein, wenn sie die vorstehend genannten Farbstoffe und/oder Pigmente enthalten.

Mit der Bildung des mindestens einen Druckbildes kann das Wert- oder Sicherheitsdokument individualisiert, insbesondere personalisiert, werden. Somit ist es möglich, zunächst einen nicht individualisierten Rohproduktkörper, beispielsweise einen Rohkartenkörper, herzustellen und diesen dann mit dem mindestens einen Druckbild der mindestens einen Polymerfolie, die mit diesem Rohproduktkörper verbunden wird, zu individualisieren. Auf diese Weise können viele identische nicht individualisierte Rohproduktkörper in einer zentralen Fertigungsstätte hergestellt und nach einem Transport zu einer dezentralen Fertigungsstätte dort mit dem jeweiligen Druckbild der mindestens einen Polymerfolie individualisiert werden.

Die mindestens eine der zwei Polymerfolien ist vorzugsweise transparent oder transluzent (durchscheinend, aber leicht Licht streuend). Damit wird gewährleistet, dass die Bedruckung der mindestens einen der zwei Polymerfolien von einer Betrachtungsseite sichtbar ist. Die Dicke der mindestens einen der zwei Polymerfolien liegt vorzugsweise in einem Bereich von 10 bis 200 µm, weiter bevorzugt in einem Bereich von 20 bis 150 µm und noch weiter bevorzugt in einem Bereich von 50 bis 200 µm. In einer am meisten bevorzugten Ausführungsform beträgt die Dicke der mindestens einen der zwei Polymerfolien 50 µm.

In einer weiteren bevorzugten Weiterbildung der vorliegenden Erfindung ist die mindestens eine der zwei Polymerfolien an einer Oberfläche aus Polyethylenterephthalat gebildet, die der mit dem mindestens einen Druckbild bedruckten Oberfläche gegenüberliegt. Eine Ausbildung der mindestens einen der zwei Polymerfolie an der der Polycarbonatseite gegenüberliegenden Seite aus Polyethylenterephthalat kann dazu genutzt werden, die Außenseite des Wert- oder Sicherheitsdokuments, an der die mindestens eine der zwei bedruckten Polymerfolie auf den Rohproduktkörper aufgebracht wird, mit einem Kratzschutz auszubilden. Polymerfolien, die an einer Seite aus Polycarbonat und an der anderen Seite aus Polyethylenterephthalat gebildet sind, können beispielsweise durch Koextrudieren der beiden Polymermaterialien hergestellt werden. Alternativ zu Polyethylenterephthalat kann auch ein anderes Material eingesetzt werden, beispielsweise ein Acrylatmaterial.

Die mindestens eine der zwei Polymerfolie kann des Weiteren zumindest teilweise aus einem Material gebildet sein, das durch geeignete Lasereinstrahlung geschwärzt werden kann, sodass in das Material eine Information mit einem Laser eingeschrieben werden kann (Laserengraving). Zur Herstellung derartiger Sicherheitsmerkmale kann dieses Material beispielsweise aus Polycarbonat mit eingelagerten Kohlenstoffpartikeln gebildet sein, sodass es die Laserstrahlung absorbiert. Eine derartige Verfahrensweise ist beispielsweise aus DE 29 07 004 B1 und WO 2008/075164 A2 bekannt. Eine derartige Ausbildung des Polymermaterials kann auch oder stattdessen zumindest für Teile des Rohproduktkörpers vorgesehen sein.

Die Dicke des Rohproduktkörpers liegt vorzugsweise in einem Bereich von 50 bis 2000 µm, weiter bevorzugt in einem Bereich von 200 bis 1500 µm und noch weiter bevorzugt in einem Bereich von 500 bis 1000 µm. In einer am meisten bevorzugten Ausführungsform beträgt die Dicke des Rohproduktkörpers 750 µm. Maßgeblich für die Dicke der mindestens einen der zwei bedruckten Polymerfolien und des Rohproduktkörpers ist die gewünschte Gesamtdicke des herzustellenden Wert- oder Sicherheitsdokuments, die sich ungefähr aus der Summe der Dicken der bedruckten Polymerfolien und des Rohproduktkörpers ergibt. Im Falle eines Wert- oder Sicherheitsdokuments in Form einer Karte gemäß ISO/IEC 7810 beträgt die Dicke der Karte etwa 760 µm.

Der Rohproduktkörper ist aus mindestens zwei Polymerschichten gebildet sein. Diese Polymerschichten können transparent, transluzent oder opak sein, wobei eine, einige oder keine transparent, eine, einige oder keine transluzent und eine, einige oder keine opak sein kann. Falls sich im Rohproduktkörper eine elektrische Schaltung befindet, ist es bevorzugt, wenn die zu der elektrischen Schaltung benachbarten Polymerschichten zummindest bereichsweise opak sind, um die elektrische Schaltung nach außen gegen Sicht abzuschirmen. Die äußeren Polymerschichten des Rohproduktkörpers können transparent sein, um innenliegende Bedruckungen sichtbar zu erhalten. Zumindest einige der Polymerschichten des Rohproduktkörpers können aus Polycarbonat gebildet sein. Vorzugsweise kann eine äußere Polymerschicht des Rohproduktkörpers als Kratzschutzschicht ausgebildet sein und hierzu aus Polyethylenterephthalat oder einem anderen hierfür geeigneten Polymer, beispielsweise einem Acrylat-Polymer, gebildet sein. Diese äußere Polymerschicht ist weiter bevorzugt diejenige, die auf der (Haupt)Seite (Rückseite) angeordnet ist, die der (Haupt)Seite des Rohproduktkörpers (Vorderseite) gegenüberliegt, auf der eine bedruckte Polymerfolie angeordnet ist. Eine innere Polymerschicht des Rohproduktkörpers kann mit einem Sicherheitsdruck versehen sein, beispielsweise mit einem Guillochendruck, mit Logos und mit allgemeinen Informationen über die die Karte ausgebende Stelle.

In einer weiteren bevorzugten Weiterbildung der vorliegenden Erfindung ist der Rohproduktkörper durch einen Mehrfachnutzen von nicht individualisierten Grundkörpern, beispielsweise Rohkartenkörpern, gebildet. Die zwei bedruckten Polymerfolie können ebenfalls in Form eines Mehrfachnutzens eingesetzt werden, sodass aus diesen Polymerfolien-Mehrfachnutzen zusammen mit dem Grundkörper-Mehrfachnutzen ein Mehrfachnutzen von mindestens zwei Wert- oder Sicherheitsdokumenten hergestellt wird. Letzterer Mehrfachnutzen stellt ebenfalls ein Wert- oder Sicherheitsprodukt dar. Durch Herstellung der Wert- oder Sicherheitsdokumente über Mehrfachnutzen wird eine hohe Produktivität des erfindungsgemäßen Verfahrens erreicht. Aus dem Mehrfachnutzen der Wert- oder Sicherheitsdokumente werden die Wert- oder Sicherheitsdokumente durch Vereinzeln erhalten, beispielsweise mit einem Stanz- oder Schneidverfahren.

Anstelle eines Mehrfachnutzens kann der Rohproduktkörper auch in Form eines Einfachnutzens ausgebildet sein, aus dem zusammen mit den bedruckten Polymerfolien-Einfachnutzen ein Einfachnutzen eines Wert- oder Sicherheitsdokuments hergestellt wird. In diesem Falle können die Wert- oder Sicherheitsdokumente ebenfalls mit einem Vereinzelungsverfahren aus dem Laminat der Einzelnutzen erhalten werden, indem ein überstehender Rand des Laminats abgetrennt wird, beispielsweise mittels eines Stanz- oder Schneidverfahrens. In einer weiteren Ausführungsform der vorliegenden Erfindung kann das Wert- oder Sicherheitsdokument auch dadurch erhalten werden, dass ein über den Rohproduktkörper-Einzelnutzen überstehender Rand der auf diesen Einzelnutzen auflaminierten Polymerfolien abgezogen wird. Dabei kann dieser überstehende Rand kantengenau am Rand des Rohproduktkörper-Einzelnutzens abgetrennt werden. Falls die zwei Polymerfolien genauso groß sind wie oder kleiner sind als der Rohproduktkörper-Einzelnutzen, können die Laminatpartner passergenau zusammengetragen und durch Laminieren miteinander verbunden werden.

In einer weiteren bevorzugten Weiterbildung der vorliegenden Erfindung bedeckt die mindestens eine der zwei bedruckten Polymerfolien den Rohproduktkörper ganzflächig. Dies ist insbesondere dann vorteilhaft, wenn die mindestens eine der zwei Polymerfolien auch eine kratzschutzfeste Außenlage des Wert- oder Sicherheitsdokuments bildet.

Alternativ dazu kann in einer nicht anspruchsgemäßen Ausführungsform die mindestens eine der zwei bedruckten Polymerfolien auch in Form eines Aufklebers auf den Rohproduktkörper appliziert werden, der kleiner ist als der Rohproduktkörper.

In einer nicht nspruchsgemäßen ersten Verfahrensvariante werden ein Rohproduktkörper mit einer bedruckten Polymerfolie zusammengetragen und miteinander verbunden. In diesem Falle wird das mindestens eine Druckbild nur an einer (Haupt)Seite des Wert- oder Sicherheitsdokuments gebildet.

Gemäß der erfindungsgemäßen Verfahrensvariante können die Druckbilder in einer besonderen Ausführungsform der vorliegenden Erfindung an den beiden (Haupt)Seiten des Wert- oder Sicherheitsdokuments überlappen und im Falle einer vollständigen Transparenz oder Transluzenz des Wert- oder Sicherheitsdokuments zumindest im Bereich der Druckbilder ein gemeinsames Druckobjekt bilden (Durchsichtpasser). D.h. die beiden Druckbilder können in diesem Falle jeweils Teilbilder des gemeinsamen Druckobjektes ausbilden. Beispielsweise kann jedes der beiden Teilbilder durch einzelne Buchstaben eines Wortes gebildet sein, das das gemeinsame Druckobjekt darstellt. Das Druckobjekt ist dann bei Betrachtung des Wert- oder Sicherheitsdokuments in Durchsicht wahrnehmbar. In einer weiteren bevorzugten Ausführungsform der vorliegenden Erfindung kann ein derartiges oder auch sonstiges gedrucktes Sicherheitsmerkmal zusammen mit einem flächenmäßig begrenzten, beispielsweise rahmenartigen, transparenten oder transluzenten Ausschnitt (Fenster) in einem ansonsten opaken Wert- oder Sicherheitsdokument verwirklicht werden, wobei sich dieses Fenster im Bereich der einander überlappenden Druckbilder oder des sonstigen gedruckten Sicherheitsmerkmals befindet. Die Opazität des Dokuments außerhalb dieses Fensters kann durch eine innenliegende opake Polymerschicht des Rohproduktkörpers, aus dem das Fenster durch Ausschneiden/Ausstanzen entfernt oder auf sonstige Weise ausgespart ist, oder durch eine flächige Bedruckung einer Polymerschicht in dem Rohproduktkörper oder auf einer der Polymerfolien, wobei das Fenster durch einen nicht bedruckten Flächenbereich gebildet ist, realisiert sein.

In einer weiteren bevorzugten Weiterbildung der vorliegenden Erfindung weist der Rohproduktkörper mindestens eine zwischen den Polymerschichten angeordnete elektrische Schaltung auf. Dadurch wird eine zusätzliche Funktionalität in dem Wert- oder Sicherheitsdokument ausgebildet. Die elektrische Schaltung kann beispielsweise mit mindestens einem integrierten Halbleiterschaltkreis und weiteren Verbindungsschaltungen und/oder einem Antennenschaltkreis gebildet sein. Insbesondere kann die elektrische Schaltung durch eine RFID-Schaltung mit einem integrierten RFID-Chip und einer RFID-Antenne gebildet sein. Die weiteren Verbindungsschaltungen können zusätzlich oder alternativ dazu beispielsweise elektrische Kontakte ausbilden, die die Außenseite des Wert- oder Sicherheitsdokuments zumindest einseitig durchdringen, sodass elektrische Signale des mindestens einen integrierten Halbleiterschaltkreises abgeleitet und/oder in diesen eingekoppelt werden können (kontaktbehaftete Karte). Außerdem kann die elektrische Schaltung auch mindestens ein Anzeigeelement, beispielsweise eine LED- oder OLED-Anzeige, und gegebenenfalls auch mindestens eine Energiequelle, wie eine Batterie, umfassen. Im Falle von bis zur Außenseite des Wert- oder Sicherheitsdokuments reichenden elektrischen Kontakten und/oder mindestens eines Anzeigeelements kann die bedruckte Polymerfolie für den Fall, dass diese auf die Außenseite mit den elektrischen Kontakten und/oder dem mindestens einen Anzeigeelement aufgebracht ist, kleiner sein als die Außenseite des Rohproduktkörpers und lediglich den Teil des Rohproduktkörpers bedecken, in dem sich die elektrischen Kontakte und/oder das mindestens eine Anzeigeelement nicht befindet. Beispielsweise kann die Polymerfolie zum Durchtritt des elektrischen Kontakts und/oder des mindestens einen Anzeigeelements eine Ausnehmung aufweisen, die flächen- und formgenau mit dem elektrischen Kontakt und/oder dem mindestens einen Anzeigeelement ausgebildet ist. Diese Ausnehmung kann beispielsweise durch Stanzen erzeugt werden. Die elektrische Schaltung ist vorzugsweise auf einer Schaltungsträgerlage angeordnet, die beispielsweise in Form einer vorzugsweise opaken Polymerfolie vorliegt. Der mindestens eine integrierte Halbleiterschaltkreis ist mit den weiteren Verbindungsschaltungen, Anzeigeelementen und Batterien elektrisch verbunden.

Das Wert- oder Sicherheitsdokument kann zusätzlich zu den beschriebenen Sicherheitselementen und -merkmalen weitere Sicherheitsmerkmale aufweisen, die entweder individualisierend oder nicht individualisierend sind. Als weitere Sicherheitsmerkmale kommen Melierfasern, Wasserzeichen, Prägedrucke, Sicherheitsfäden, Mikroschrift, Kippbilder, Hologramme, Oberflächenstrukturen und dergleichen in Betracht. Diese können sich in und/oder auf dem Rohproduktkörper und/oder in und/oder auf der bedruckten Polymerfolie befinden.

Zur Herstellung des Wert- oder Sicherheitsproduktes aus dem Rohproduktkörper und den zwei bedruckten Polymerfolie (jeweils Einzel- oder Mehrfachnutzen) und gegebenenfalls zur Herstellung des Rohproduktkörpers aus den Polymerschichten können Laminierverfahren verwendet werden, deren Verfahrensparameter an die miteinander zu verbindenden Materialien angepasst sind.

Vor dem Laminiervorgang werden die zu verbindenden Laminierpartner (Rohproduktkörper, zwei bedruckte Polymerfolien) zusammengetragen, sodass sie Seite an Seite aufeinanderliegen, wobei vorzugsweise darauf geachtet wird, dass die beiden Partner passergenau aufeinanderliegen, d.h. die den herzustellenden Wert- oder Sicherheitsdokumenten entsprechenden Bereiche der Rohproduktkörper und bedruckten Polymerfolien werden genau aufeinandergelegt. Die zu verbindenden Laminierpartner können gegebenenfalls angeraut sein. Dann wird dieser Produktstapel vorzugsweise fixiert, beispielsweise indem die Laminierpartner punktweise miteinander verschweißt werden, etwa mittels eines Ultraschall-Schweißverfahrens. Anschließend findet das Laminierverfahren statt. Die Lamination kann in üblichen Laminiervorrichtungen durchgeführt werden, beispielsweise in einer Etagenpresse oder einem Rundtischlaminator oder in einer kontinuierlichen Durchlaufanlage.

Vorzugsweise wird ein übliches Heiß-/Kalt-Laminierverfahren angewendet, bei dem ein fixierter Produktstapel aus einem Rohproduktkörper und zwei bedruckten Polymerfolie zuerst unter erhöhtem Druck und erhöhter Temperatur während einer ersten vorgegebenen Zeitspanne gepresst wird und dann unter Erhöhung des Druckes abgekühlt und in diesem Zustand während einer zweiten vorgegebenen Zeitspanne weiter unter gegebenenfalls weiter erhöhtem Druck gehalten wird. Der Druck in der Heißpressphase beträgt vorzugsweise mindestens 20 N/cm². Die Temperatur während der Heißpressphase liegt vorzugsweise im Bereich von 150 °C bis 200 °C und weiter bevorzugt im Bereich von 160 °C bis 195 °C. Beim Laminieren können Oberflächenstrukturen in die äußere Oberfläche des Wert- oder Sicherheitsdokuments eingeprägt werden, beispielsweise ein Linsenraster zur Herstellung von Kippbildern oder ein Hologramm.

Zur näheren Erläuterung der Erfindung dienen die nachfolgend erläuterten Figuren und Beispiele, wobei diese lediglich Anschauungsbeispiele für bestimmte nicht anspruchsgemäße Ausführungsformen darstellen, nicht jedoch eine Beschränkung des Umfangs der Erfindung. Es zeigen im Einzelnen:
- Fig. 1:: eine isometrische Ansicht eines nicht anspruchsgemäßen Wert- oder Sicherheitsdokuments;
- Fig. 2:: eine schematische Darstellung der Verfahrensschritte eines nicht anspruchsgemäßen Verfahrens;
- Fig. 3:: ein Beispiel für die Herstellung einer ID-Karte mit dem nicht anspruchsgemäßen Verfahren;
- Fig. 4: einen Querschnitt durch die nicht anspruchsgemäße ID-Karte von Fig. 3.

In den Figuren bezeichnen gleiche Bezugszeichen gleiche Elemente oder Elemente mit derselben Funktion. Die Figuren zeigen die Gegenstände nicht in jedem Falle maßstäblich zueinander. Ferner sind auch die Größenverhältnisse einzelner Elemente zu denen anderer in einer Figur oder zwischen den Figuren nicht in jedem Falle maßstäblich zueinander dargestellt.

Das mit dem erfindungsgemäßen Verfahren herstellbare Wert- oder Sicherheitsprodukt 100 kann ein Wert- oder Sicherheitsdokument sein. Das Wert- oder Sicherheitsdokument kann ein Personaldokument (Identitätsdokument, insbesondere ID-Karte), wie ein Reisepass, ein Personalausweis, ein Zugangsausweis oder dergleichen, eine Scheckkarte oder eine Banknote oder noch ein anderes Dokument, sein. Alle nachfolgenden Beispiele werden stellvertretend für andere Dokumenten- bzw. Produkttypen anhand einer ID-Karte beschrieben.

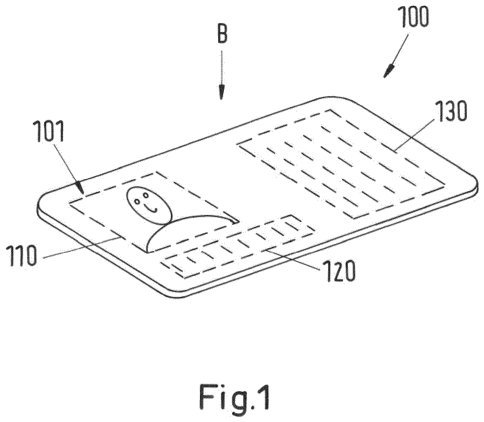

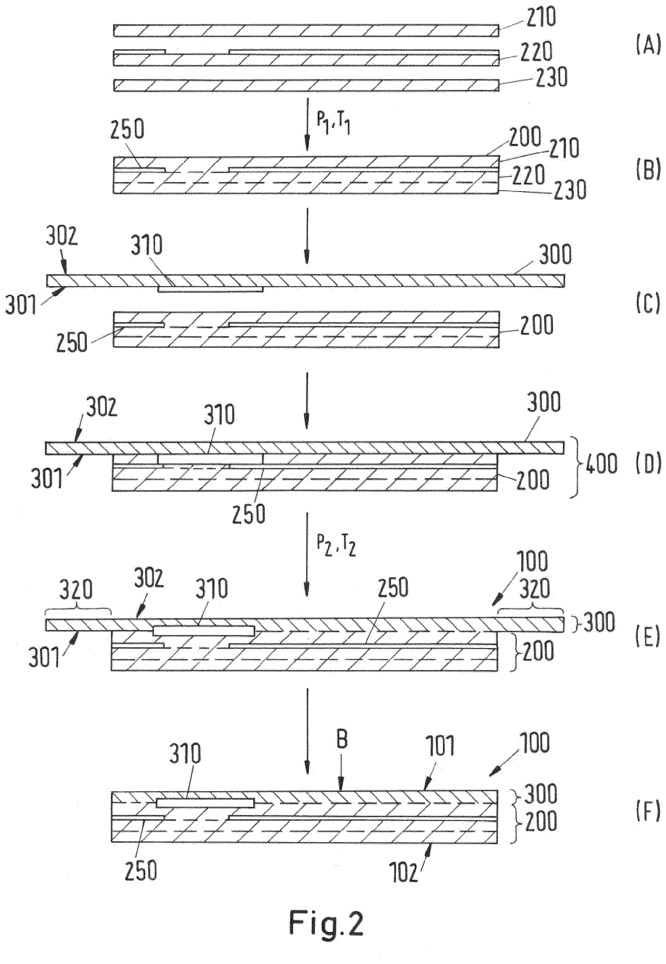

In Fig. 1 ist eine ID-Karte 100 dargestellt, die als Laminat aus einem Rohproduktkörper 200, hergestellt aus mehreren Polymerschichten 210, 220, 230 (Fig. 2), und einer oder mehreren Polymerfolien 300 (Fig. 2) zusammengefügt ist. Im nicht anspruchsgemäßen Verfahrensbeispiel gemäß Fig. 2 wird eine Polymerfolie verwendet. Beispielsweise können die Polymerschichten und die mindestens eine Polymerfolie aus Polycarbonat und/oder Polyethylenterephthalat bestehen oder dieses enthalten. Die Lagen können ungefüllt oder mit Füllstoffen gefüllt sein. In letzterem Falle sind sie opak, ansonsten transparent/transluzent. Die Polymerlagen 210, 220, 230, 300 der ID-Karte sind aufgrund der Lamination derart miteinander verbunden, dass sie einen monolithischen Block bilden, der nicht ohne Zerstörung der Lagen gespalten werden kann. Zusätzlich kann sich auf der Karte ein Schutzlack befinden, der nach dem Laminieren auf die Karte aufgetragen ist (nicht dargestellt). Der Schutzlack ist transparent oder transluzent, sodass darunter liegende Informationen von außen sichtbar sind. Ebenso ist die mindestens eine Polymerfolie transparent oder transluzent, um ein mit der Polymerfolie auf den Rohproduktkörper aufgebrachtes Druckbild 310 von der Betrachtungsseite B erkennen zu können. In der Karte innenliegend kann ferner beispielsweise ein RFID-Schaltkreis, gebildet aus einer Antenne und einem mit der Antenne elektrisch verbundenen RFID-Chip, enthalten sein (nicht dargestellt). Der Schaltkreis ist durch opake Polymerlagen in dem Rohproduktkörper und/oder durch innenliegende opake Bedruckungen von außen nicht sichtbar.

Die ID-Karte 100 weist eine obere (Haupt)Seite 101 (Vorderseite) und eine untere (Haupt)Seite 102 (Rückseite) (Fig. 1, 2F) auf. Auf der Oberseite befinden sich ein Gesichtsbild 110 des Inhabers der Karte sowie zwei Datenfelder, nämlich ein erstes Datenfeld 120 und ein zweites Datenfeld 130, in denen sich Karten- und Inhaberdaten in Klarschrift und/oder in verschlüsselter Form befinden. Das Gesichtsbild und die in den Datenfeldern gedruckten Daten stellen individualisierende, vorliegend für den Karteninhaber personalisierende, Informationen dar. Das Gesichtsbild und die Daten in den Datenfeldern sind durch entsprechende Druckschichten hergestellt, die das mindestens eine Druckbild gemäß der vorliegenden Erfindung bilden. In Fig. 2 ist exemplarisch lediglich die Herstellung des Gesichtsbildes gezeigt, nicht dagegen die Erzeugung der Druckbilder im ersten und zweiten Datenfeld. Zumindest teilweise können diese Daten auch durch Laserengraving im Inneren der Karte erzeugt sein. Zusätzlich weist die ID-Karte auch einen Sicherheitsdruck 250 auf, der in Fig. 1 der Übersichtlichkeit halber nicht gezeigt ist.

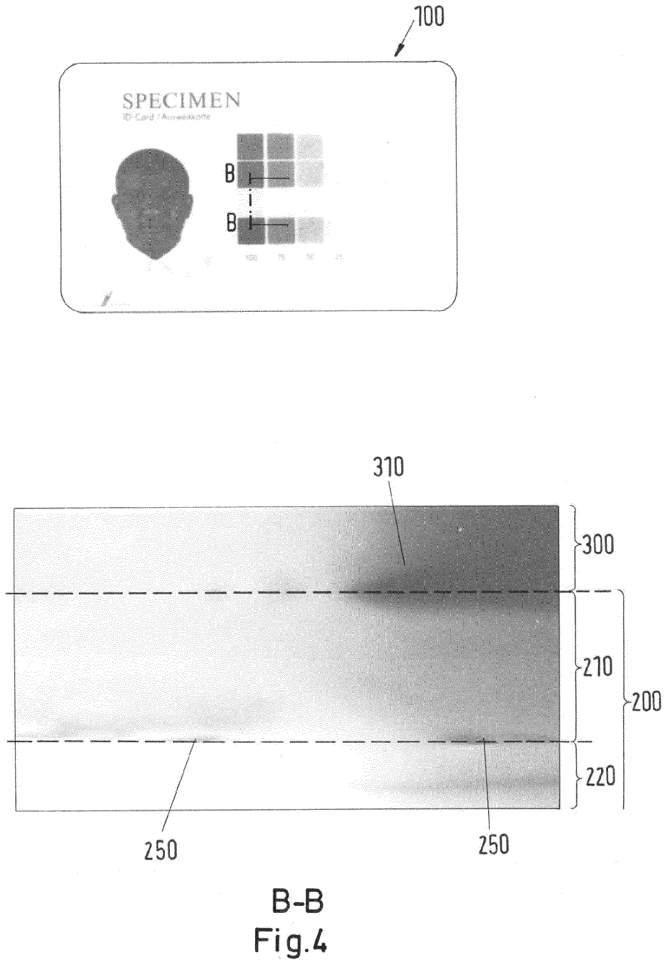

In Fig. 2 ist das nicht anspruchsgemäßeVerfahren mit den einzelnen Verfahrensschritten schematisch dargestellt:
Zur Herstellung eines Rohproduktkörpers 200 (Fig. 2B) werden zunächst mindestens zwei (im vorliegenden Falle: drei) Polymerschichten 210, 220, 230 bereitgestellt (Fig. 2A; wie Verfahrensschritt (a) des erfindungsgemäßen Verfahrens). Diese Polymerschichten haben im vorliegenden Beispiel das Endformat der herzustellenden ID-Karte 100. Stattdessen können auch Einfachnutzen der Polymerschichten verwendet werden, die ein Format haben, das größer ist als die ID-Karte, sodass ein Einfachnutzen der ID-Karte hergestellt und letztere durch Vereinzeln, beispielsweise Ausschneiden oder Ausstanzen, aus dem Einfachnutzen erhalten wird. In noch einer anderen Alternative können die Polymerschichten auch in Form von Mehrfachnutzen eingesetzt werden, deren Format ein Vielfaches des Formats der ID-Karte ist, sodass ein Mehrfachnutzen von ID-Karten hergestellt wird, aus dem die ID-Karten durch Vereinzeln erhalten werden. Die Polymerschichten können aus einem der für Wert- oder Sicherheitsdokumente üblicherweise verwendeten Materialien gebildet sein (siehe Angaben zu den Materialien unter ,Definitionen') und gefüllt oder ungefüllt vorliegen. Vorzugsweise sind diese Schichten aus Polycarbonat oder Polyethylenterephthalat gebildet. Es ist besonders bevorzugt, dass die nachfolgend mit der Polymerfolie 300 in Kontakt zu bringende oben liegende Polymerschicht 210 aus Polycarbonat gebildet ist, um eine Diffusion der Druckfarbe des Druckbildes 310 in das Polycarbonat-Material zu begünstigen (Fig. 4). Die unten liegende Polymerschicht 230 kann vorzugsweise aus Polyethylenterephthalat gebildet sein, um eine Kratzschutzschicht an der unteren (Haupt)Seite 102 der ID-Karte zu bilden. Die untere Polymerschicht 230 und die mittlere Polymerschicht 220 können opak und hierzu mit einem Pigment gefüllt sein. Die obere Polymerschicht 210 ist vorzugsweise transparent oder transluzent, um zu gewährleisten, dass ein auf der mittleren Polymerschicht gebildeter, vorzugsweise nicht-individualisierender, Sicherheitsdruck 250 von der Betrachtungsseite B erkennbar ist.

Der Sicherheitsdruck 250, beispielsweise Guillochen, kann beispielsweise mit einer üblichen Druckfarbe erzeugt sein, insbesondere wenn ein herkömmliches Flachdruckverfahren, wie ein Offset-Druckverfahren eingesetzt wird. Anstelle dieses Verfahrens kann auch jedes andere Druckverfahren, einschließlich eines Tiefdruck-, Durchdruck- oder digitalen Druckverfahrens, wie eines Tintenstrahl-Druckverfahrens, eingesetzt werden. In letzterem Falle ist eine an dieses Druckverfahren angepasste Druckfarbe zu verwenden.

Die Polymerschichten 210, 220, 230 werden dann zu einem Schichtenstapel zusammengetragen und in dem Stapel vorzugsweise fixiert, beispielsweise mit einem Ultraschall-Punktschweißverfahren (nicht dargestellt). Es ist auch möglich, eine Trägerlage mit einer darauf gebildeten elektrischen Schaltung, beispielsweise einer RFID-Schaltung mit RFID-Chip und damit verbundener RFID-Antenne, in den Schichtenstapel zu integrieren (nicht dargestellt).

Anschließend werden die Polymerschichten 210, 220, 230 in dem Schichtenstapel miteinander verbunden, wobei der Rohkartenkörper 200 (Rohproduktkörper) gebildet wird (Fig. 2B; wie Verfahrensschritt (a) des erfindungsgemäßen Verfahrens). Hierzu werden die Polymerschichten einem ersten Laminierverfahren in einer Laminierstation unterworfen. Beim Laminieren wird der Schichtenstapel in einer Laminierpresse unter hohem Druck P₁ gepresst (beispielsweise mit einem Druck von über 40 N/cm²) und dabei auf eine Temperatur T₁ aufgeheizt, bei der die Polymerschichten zumindest weich werden, sodass sie sich verbinden. Beispielsweise kann der Stapel auf eine Temperatur im Bereich von 160 bis 200 °C erwärmt werden. Diese Temperatur wird während einer vorgegebenen Zeitspanne aufrechterhalten, beispielsweise 10 min. Danach wird der Stapel unter Aufrechterhaltung oder sogar weiterer Erhöhung des Pressdruckes abgekühlt, vorzugsweise auf Raumtemperatur. Dabei entsteht eine unlösbare Verbindung zwischen den Schichten. Die einzelnen Schichten sind in dem fertig laminierten Rohproduktkörper 200, der beim Laminieren entsteht, nicht mehr voneinander zu unterscheiden: In einem angefertigten Querschliff des Körpers sind keine Grenzflächen zwischen den Schichten mehr erkennbar. Dies ist in Fig. 2B, 2C, 2D, 2E, 2F durch Strichlierungen angedeutet, die lediglich die vor dem Laminieren noch bestehenden Grenzflächen der einzelnen Schichten symbolisieren sollen.

Alternativ zu einem Laminierverfahren zur Herstellung des Rohproduktkörpers 200 aus einzelnen Polymerschichten 210, 220, 230 kann dieser auch in nicht beanspruchten Ausführungsformen mit einem Extrusions- oder Spritzgießverfahren oder mit noch einem anderen Verfahren zur Herstellung von Polymerkörpern hergestellt werden.

Ferner wird eine Polymerlage 300 bereitgestellt (Fig. 2C; wie Verfahrensschritt (a) des erfindungsgemäßen Verfahrens). Diese Polymerlage ist vorzugsweise ebenso wie die Polymerschichten 210, 220, 230 des Rohproduktkörpers 200 aus einem der Materialien hergestellt, die für die Herstellung eines Wert- oder Sicherheitsproduktes 100 üblicherweise verwendet werden (siehe Angaben zu den Materialien unter ,Definitionen'). Vorzugsweise ist die Polymerfolie aus Polycarbonat gebildet. Die Polymerfolie ist vorzugsweise transparent oder transluzent, um das innenliegende Druckbild 310 sowie den innenliegenden Sicherheitsdruck 250 von der Betrachtungsseite B erkennen zu können. Die Polymerfolie ist vorliegend in einem Übermaß hergestellt, d.h. in einem Format, das größer ist als die ID-Karte 100.

Auf die Polymerfolie 300 wird ein Druckbild 310 aufgebracht (Fig. 2C; wie Verfahrensschritt (b) des erfindungsgemäßen Verfahrens) und zwar seitenverkehrt, weil die Polymerfolie mit der bedruckten Seite 301 mit dem Rohproduktkörper 200 zusammengetragen und verbunden und das Druckbild in der fertig gestellten ID-Karte 100 von der Rückseite 302 der Polymerfolie betrachtet wird (Betrachtungsseite B). Dieses Druckbild ist vorzugsweise individualisierend, im vorliegenden Falle für den Karteninhaber personalisierend, d.h. das Druckbild weist die ID-Karte 100 dem Karteninhaber zu. Beispielsweise kann das Druckbild durch das Gesichtsbild 110 (und die personalisierenden Daten in den Datenfeldern 120, 130) gebildet sein. Das mindestens eine Druckbild wird mit einer Druckfarbe auf eine Oberfläche der Polymerfolie gedruckt, vorzugsweise mit einem digitalen Druckverfahren, weiter bevorzugt mit einem Tintenstrahldruckverfahren. Ein derartiges Verfahren ist bevorzugt, weil damit eine flexible Herstellung unterschiedlicher Druckbilder von ID-Karte zu ID-Karte ermöglicht wird. Alternativ kann natürlich auch ein anderes Druckverfahren, wie ein Flachdruckverfahren, ein Tiefdruckverfahren oder ein Durchdruckverfahren, beispielsweise ein Offset-, Flexo- oder Siebdruckverfahren, eingesetzt werden, wenngleich diese Verfahren weniger flexibel als digitale Druckverfahren sind.

Die Druckfarbe kann grundsätzlich jede übliche Druckfarbe sein. Jedoch ist es bevorzugt, eine Druckfarbe mit einem Bindemittel in Form eines Polycarbonatderivats auf Basis eines geminal disubstituierten Dihydroxydiphenylcycloalkans einzusetzen. Die Druckfarbe kann übliche Farbstoffe oder Pigmente zur Erzielung einer farbigen Druckwiedergabe enthalten, wobei Farbstoffe bevorzugt sind, weil diese beim nachfolgenden Laminierprozess leichter in die angrenzenden Materialschichten eindiffundieren. Anstelle von oder zusätzlich zu diesen absorbierenden Farbstoffen und Pigmenten kann die Druckfarbe auch andere Farbstoffe und/oder Pigmente enthalten, die beispielsweise lumineszieren.

Die bedruckte Polymerfolie 300 kann alternativ auf der dem Druckbild 310 abgewandten Seite mit einem Kratzschutz oder Abriebschutz versehen sein. Dieser kann aus einer kaschierten, coextrudierten oder auch lackierten Beschichtung ähnlich der Folie 230 bestehen.

Im Anschluss an die Herstellung des Rohproduktkörpers 200 und die Bereitstellung der bedruckten Polymerfolie 300 werden die bedruckte Polymerfolie und der Rohproduktkörper zu einem Produktstapel (Kartenstapel) 400 zusammengetragen, wobei diejenige Oberfläche 301 der Polymerfolie, auf der sich das Druckbild 310 befindet, mit der oberen Polymerschicht 210 des Rohproduktkörpers in Kontakt gebracht wird (Fig. 2D; wie Verfahrensschritt (c) des erfindungsgemäßen Verfahrens). Die Polymerfolie wird relativ zu dem Rohproduktkörper exakt positioniert, d.h. die beiden Verbindungspartner werden passergenau aufeinander positioniert. Beispielsweise kann die Polymerfolie am Rand des ID-Kartenformats liegende Positionsmarken aufweisen, die mit dem Rand des Rohproduktkörpers zur Deckung gebracht werden. Im Falle von Einfach- oder Mehrfachnutzen der Polymerfolie und des Rohproduktkörpers können auch Positionsmarken außerhalb der ID-Kartenbereiche vorgesehen sein, die zur Deckung gebracht werden.

Die Polymerlagen können dann im Kartenstapel 400 fixiert werden, sodass die Polymerfolie 300 und der Rohproduktkörper 200 nicht mehr gegeneinander verschoben werden können. Hierzu kann ein Ultraschall-Punktschweißverfahren eingesetzt werden.

Anschließend werden der Rohproduktkörper 200 und die bedruckte Polymerfolie 300 miteinander verbunden, indem der Kartenstapel 400 in einem zweiten Laminierverfahren laminiert wird (Fig. 2E; wie Verfahrensschritt (d) des erfindungsgemäßen Verfahrens). Hierzu wird der fixierte Kartenstapel in eine Laminierpresse, beispielsweise einen Rundtischlaminator verbracht und dort unter einem hohen Druck P₂ von mindestens 20 N/cm² und bei einer Temperatur T₂ im Bereich von beispielsweise 160 bis 195 °C laminiert. Diese Heißphase des Laminierprozesses erstreckt sich über eine vorgegebene Zeitspanne, beispielsweise 10 min, und wird durch eine Kaltphase des Laminierprozesses abgelöst, in der der Druck aufrechterhalten oder sogar noch weiter erhöht wird, die Temperatur aber auf Raumtemperatur abgesenkt wird. Diese Kaltphase dauert wie die Heißphase beispielsweise 10 min. In diesem Verfahren verbinden sich die Polymerfolie und der Rohproduktkörper miteinander, sodass nach Abschluss des Verfahrens keine Grenzfläche zwischen beiden Verbindungspartnern mehr erkennbar ist.

Im unteren Teil von Fig. 4 ist ein Teil-Querschnitt durch das laminierte Dokument dargestellt. Es ist zu erkennen, wie sich die Druckfarbe des Druckbildes 310 beim Laminieren in die angrenzenden Materialbereiche der Polymerfolie 300 und der oberen Polymerschicht 210 des Rohproduktkörpers 200 durch Diffusion verteilt: Im unteren Figurenteil ist ein Ausschnitt aus einem Schnitt B - B der ID-Karte 100 in Form eines Querschliffes durch bedruckte Bereiche dargestellt. Die Stelle dieses Schnittes B - B in der ID-Karte ist im oberen Figurenteil gezeigt.

Der Schnitt zeigt einen Ausschnitt aus dem oberen Teil der ID-Karte und zwar die Polymerfolie 300 im oberen Bereich des Schnittes, darunter die obere Polymerschicht 210 und nochmals darunter einen Teil der mittleren Polymerschicht 220. Die untere Polymerschicht 230 ist in Fig. 4 nicht gezeigt. Die Grenzflächen zwischen diesen Polymerlagen sind strichliert angedeutet. Im Querschliff sind sie praktisch nicht zu erkennen, weil sich die Materialien aufgrund der Lamination optimal miteinander verbunden haben, sodass ein monolithischer Verbund gebildet worden ist.

Im rechten oberen Bereich des Schnittes ist ein gedruckter Bereich des Druckbildes 310 an Hand der dort dargestellten dunklen Färbung des Materials erkennbar. Diese Verfärbung des Materials befindet sich im Bereich der Grenze zwischen der Polymerfolie 300 und der oberen Polymerschicht 210. Darüber hinaus sind auch schwache dunklere Verfärbungen des Materials im Bereich der Grenze zwischen der oberen Polymerschicht und der mittleren Polymerschicht 220 zu erkennen, die auf den Sicherheitsdruck 250 im Rohproduktkörper 200 zurückzuführen sind.

Aus dem Schnitt ist erkennbar, dass die Druckfarbe des personalisierenden Druckbildes 310 nicht an der Grenze zwischen der Polymerfolie 300 und der oberen Polymerschicht 210 lokalisiert ist, sondern sich aufgrund von Diffusion sowohl in das Material des Polymerfolie (nach oben) als auch in das Material der oberen Polymerschicht (nach unten) verteilt hat. Dagegen ist die Druckfarbe des Sicherheitsdruckes 250 im Wesentlichen im Bereich der Grenze zwischen der oberen Polymerschicht und der mittleren Polymerschicht 220 geblieben. Eine Diffusion hat in diesem Falle praktisch nicht stattgefunden.

Würde die ID-Karte 100 daher zum Zwecke einer Fälschung oder Verfälschung delaminiert werden, so könnte die Druckfarbe des personalisierenden Druckbildes 310 nicht auf eine der beiden angrenzenden Polymerlagen lokalisiert werden. Ein Austausch der Polymerfolie 300 durch eine andere Polymerfolie allein würde daher nicht zu einer unerkennbaren Fälschung der ID-Karte führen, weil das bisherige Druckbild wahrnehmbar bleibt.

Nach dem Laminieren der Verbindungspartner der ID-Karte 100 wird der über den Rohproduktkörper 200 überstehende Randbereich 320 der Polymerfolie 300 abgetrennt, entweder mit einem Stanzverfahren oder durch einfaches Abziehen des Randbereiches, da die Folie exakt am Rohproduktkörperrand abgetrennt werden kann (Fig. 2F). Mit diesem abschließenden Verfahrensschritt wird die ID-Karte fertiggestellt, falls nicht noch weitere Sicherheitsmerkmale und/oder ein Schutzlack auf die Außenseiten des fertiggestellten Laminats aufgebracht werden.

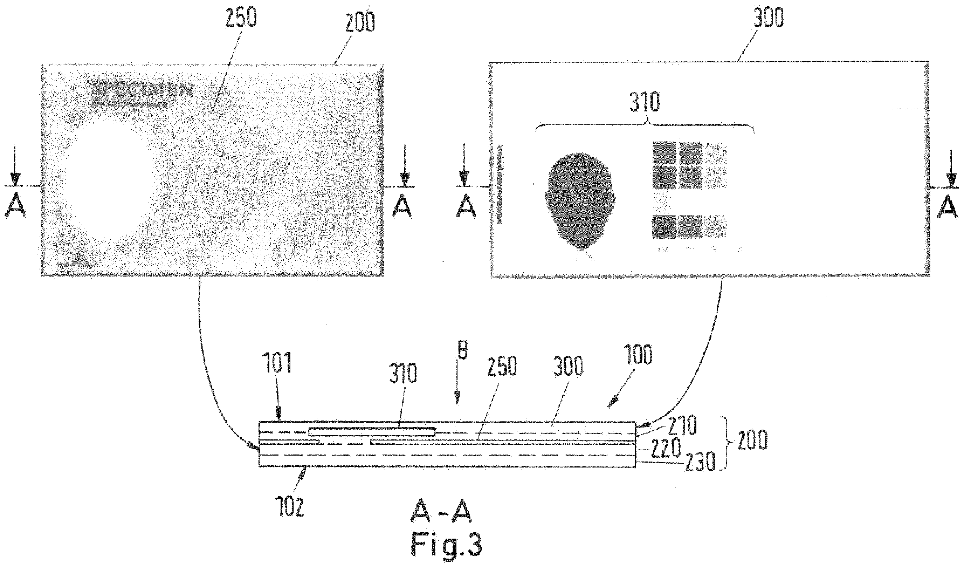

In Fig. 3 ist ein Beispiel für das Layout des Sicherheitsdruckes 250 in dem Rohproduktkörper 200 und des individualisierenden Druckbildes 310 auf der Polymerfolie 300 veranschaulicht. Im unteren Figurenteil ist die ID-Karte 100 im Schnitt A - A gezeigt, wobei die Angaben zu den Schnittebenen im oberen Figurenteil stellvertretend für die laminierte ID-Karte am Rohproduktkörper und an der Polymerfolie markiert sind.

### Bezugszeichenliste

- 100: ID-Karte, Wert- oder Sicherheitsprodukt, Wert- oder Sicherheitsdokument
- 101: obere (Haupt)Seite)
- 102: untere (Haupt)Seite
- 110: Gesichtsbild (Passbild)
- 120: erstes Datenfeld
- 130: zweites Datenfeld
- 200: Rohproduktkörper
- 210: obere Polymerschicht
- 220: mittlere Polymerschicht
- 230: untere Polymerschicht
- 250: Sicherheitsdruck
- 300: Polymerfolie
- 301: bedruckte Seite/Oberfläche der Polymerfolie
- 302: Rückseite der Polymerfolie
- 310: Druckbild
- 320: überstehender Randbereich
- 400: Produktstapel, Kartenstapel
- B: Betrachtungsseite

## Patentansprüche

1. Verfahren zum Herstellen eines Wert- oder Sicherheitsproduktes (100), umfassend folgende Verfahrensschritte:
(a) Bereitstellen eines Rohproduktkörpers (200) und zwei Polymerfolien (300), wobei der Rohproduktkörper (200) durch Laminieren von mindestens zwei Polymerschichten (210, 220, 230) hergestellt wird;
(b) Bedrucken jeweils einer der Oberflächen (301) der zwei Polymerfolien (300) mit mindestens einem Druckbild (310);
(c) Zusammentragen des Rohproduktkörpers (200) und der zwei Polymerfolie (300) zu einem Produktstapel (400), sodass der Rohproduktkörper (200) an dessen beiden Seiten mit jeweils einer der zwei bedruckten Polymerfolie (300) zu einem Produktstapel (400) zusammengetragen wird, wobei die mit dem mindestens einen Druckbild (310) bedruckten Oberflächen (301) der zwei Polymerfolien (300) in Kontakt mit dem Rohproduktkörper (200) gebracht werden; und
(d) Laminieren des Produktstapels (400), sodass ein unlösbarer Verbund zwischen dem Rohproduktkörper (200) und den zwei Polymerfolien (300) erzeugt wird.

2. Verfahren nach einem der vorstehenden Ansprüche, **dadurch gekennzeichnet, dass** das mindestens eine Druckbild (310) eine individualisierende Information enthält.

3. Verfahren nach einem der vorstehenden Ansprüche, **dadurch gekennzeichnet, dass** das mindestens eine Druckbild (310) mit einer Tinte gedruckt ist, die ein Bindemittel auf der Basis eines Polycarbonatderivats enthält.

4. Verfahren nach einem der vorstehenden Ansprüche, **dadurch gekennzeichnet, dass** das mindestens eine Druckbild (310) mit einem digitalen Druckverfahren gedruckt wird.

5. Verfahren nach einem der vorstehenden Ansprüche, **dadurch gekennzeichnet, dass** der Rohproduktkörper (200) zumindest an der Seite, die in Verfahrensschritt (c) mit der Oberfläche (301) der mindestens einen der zwei Polymerfolien (300) in Kontakt gebracht wird, aus Polycarbonat gebildet ist.

6. Verfahren nach einem der vorstehenden Ansprüche, **dadurch gekennzeichnet, dass** die mindestens eine der zwei Polymerfolien (300) zumindest an der mit dem mindestens einen Druckbild (310) bedruckten Oberfläche (301) aus Polycarbonat gebildet ist.

7. Verfahren nach Anspruch 6, **dadurch gekennzeichnet, dass** die mindestens eine der zwei Polymerfolien (300) an einer Oberfläche (302) aus Polyethylenterephthalat gebildet ist, die der mit dem mindestens einen Druckbild (310) bedruckten Oberfläche (301) gegenüberliegt.

8. Verfahren nach einem der vorstehenden Ansprüche, **dadurch gekennzeichnet, dass** der Rohproduktkörper (200) durch einen Mehrfachnutzen von nicht individualisierten Rohkartenkörpern gebildet ist.

9. Verfahren nach einem der vorstehenden Ansprüche, **dadurch gekennzeichnet, dass** der Rohproduktkörper (200) mindestens eine zwischen den Polymerschichten (210, 220, 230) angeordnete elektrische Schaltung aufweist.

10. Verfahren nach einem der vorstehenden Ansprüche, **dadurch gekennzeichnet, dass** die mindestens eine der zwei Polymerfolien (300) ein kleineres Format hat als der Rohproduktkörper (300) und nur einen Teil des Rohproduktkörpers (200) bedeckt.

## Claims

1. A method for manufacturing a valuable or security product (100), comprising the following method steps:
(a) providing a raw product body (200) and two polymer films (300), the raw product body (200) being produced by laminating at least two polymer layers (210, 220, 230);
(b) imprinting one of the surfaces (301) of each of the two polymer films (300) with at least one print image (310);
(c) placing the raw product body (200) and the two polymer films (300) together to form a product stack (400) so that the raw product body (200) is brought together on both sides with one of the two printed polymer films (300) to form a product stack (400), the surfaces (301) of the two polymer films (300) that are imprinted with the at least one print image (310) being brought into contact with the raw product body (200); and
(d) laminating the product stack (400) so that a non-detachable bond is created between the raw product body (200) and the two polymer films (300).

2. The method as set forth in one of the preceding claims, **characterized in that** the at least one print image (310) contains an individualizing piece of information.

3. The method as set forth in one of the preceding claims, **characterized in that** the at least one print image (310) is printed using an ink containing a binding agent that is based on a polycarbonate derivative.

4. The method as set forth in one of the preceding claims, **characterized in that** the at least one print image (310) is printed using a digital printing method.

5. The method as set forth in one of the preceding claims, **characterized in that** the raw product body (200) is made of polycarbonate at least on the side that is brought into contact with the surface (301) of the at least one of the two polymer films (300) in method step (c).

6. The method as set forth in one of the preceding claims, **characterized in that** the at least one of the two polymer films (300) is made of polycarbonate at least on the surface (301) that is imprinted with the at least one print image (310).

7. The method as set forth in claim 6, **characterized in that** the at least one of the two polymer films (300) that is formed of polyethylene terephthalate on one surface (302) which is situated opposite the surface (301) that is imprinted with the at least one print image (310).

8. The method as set forth in one of the preceding claims, **characterized in that** the raw product body (200) is formed through a multiple use of non-individualized raw card bodies.

9. The method as set forth in one of the preceding claims, **characterized in that** the raw product body (200) has at least one electrical circuit that is arranged between the polymer layers (210, 220, 230).

10. The method as set forth in one of the preceding claims, **characterized in that** the at least one of the two polymer films (300) has a smaller format than the raw product body (300) and covers only a portion of the raw product body (200).

## Revendications

1. Procédé pour la fabrication d'un produit de valeur ou de sécurité (100), comprenant les étapes de procédé suivantes :
(a) mise à disposition d'un corps de produit brut (200) et de deux feuilles de polymère (300), le corps de produit brut (200) étant fabriqué par stratification d'au moins deux couches de polymère (210, 220, 230) ;
(b) impression à chaque fois d'une des surfaces (301) des deux feuilles de polymère (300) avec au moins une image imprimée (310) ;
(c) la superposition du corps de produit brut (200) et des deux feuilles de polymère (300) pour donner un empilement de produit (400), de sorte que le corps de produit brut (200), au niveau de ses deux côtés, est superposé avec à chaque fois l'une des deux feuilles de polymère imprimées (300) pour donner un empilement de produit (400), la surface (301) des deux feuilles de polymère (300) imprimée avec l'au moins une image imprimée (310) étant mise en contact avec le corps de produit brut (200) ; et
(d) stratification de l'empilement de produit (400), de sorte qu'un composite non détachable soit produit entre le corps de produit brut (200) et les deux feuilles de polymère (300).

2. Procédé selon l'une quelconque des revendications précédentes, **caractérisé en ce que** l'au moins une image imprimée (310) contient une information individualisante.

3. Procédé selon l'une quelconque des revendications précédentes, **caractérisé en ce que** l'au moins une image imprimée (310) est imprimée avec une encre qui contient un liant à base d'un dérivé de polycarbonate.

4. Procédé selon l'une quelconque des revendications précédentes, **caractérisé en ce que** l'au moins une image imprimée (310) est imprimée par un procédé d'impression numérique.

5. Procédé selon l'une quelconque des revendications précédentes, **caractérisé en ce que** le corps de produit brut (200) est formé de polycarbonate au moins au niveau du côté qui, dans l'étape de procédé (c), est mis en contact avec la surface (301) de l'au moins une des deux feuilles de polymère (300).

6. Procédé selon l'une quelconque des revendications précédentes, **caractérisé en ce que** l'au moins une des deux feuilles de polymère (300) est formée de polycarbonate au moins au niveau de la surface (301) imprimée avec l'au moins une image imprimée (310).

7. Procédé selon la revendication 6, **caractérisé en ce que** l'au moins une des deux feuilles de polymère (300) est formée de poly(téréphtalate d'éthylène) au niveau d'une surface (302), qui fait face à la surface (301) imprimée avec l'au moins une image imprimée (310).

8. Procédé selon l'une quelconque des revendications précédentes, **caractérisé en ce que** le corps de produit brut (200) est formé par une réutilisation de corps de cartes bruts non individualisés.

9. Procédé selon l'une quelconque des revendications précédentes, **caractérisé en ce que** le corps de produit brut (200) présente au moins un circuit électrique disposé entre les couches de polymère (210, 220, 230).

10. Procédé selon l'une quelconque des revendications précédentes, **caractérisé en ce que** l'au moins une des deux feuilles de polymère (300) possède un plus petit format que le corps de produit brut (300) et ne recouvre qu'une partie du corps de produit brut (200).
